# EUROPEAN PATENT APPLICATION

(11) **EP 4 694 031 A1**
(43) Date of publication of application: **11.02.2026**
(21) Application number: 23930132.8
(22) Date of filing: 26.12.2023
(51) Int. Cl.: H04L 9/40, G06F 21/54, G06F 21/55

(54) **ASPECT-TECHNOLOGY-BASED SECURITY PROTECTION SYSTEM**

(30) Priority: 29.03.2023 CN 202310348836
(71) Applicant: Alipay (Hangzhou) Information Technology Co., Ltd., Hangzhou, Zhejiang 310000 (CN)
(72) Inventor: LI, Ping, Hangzhou, Zhejiang 310000 (CN)
(74) Representative: Winter, Brandl - Partnerschaft mbB
(86) International application number: PCT/CN2023/141808
(87) International publication number: WO 2024/198569

(57) **Abstract**

Embodiments of this specification provide aspect-oriented technology based security protection systems, including a cloud management and control platform and a self-protection module. The self-protection module is installed in an aspect-oriented security base of a server for a to-be-protected application. The cloud management and control platform is configured to formulate a security policy, and send the security policy to the server, where the security policy includes injection point information of the to-be-protected application and a detection rule. The aspect-oriented security base is configured to send the security policy to the self-protection module when obtaining, by listening, the security policy sent by the cloud management and control platform. The self-protection module is configured to parse the security policy to obtain the injection point information and the detection rule; inject the detection rule into a corresponding injection point in the to-be-protected application based on the injection point information so that the detection rule is executed when a function corresponding to the injection point is called; and determine, based on an execution result, whether to execute a corresponding event action, and generate a security protection log. The embodiments of this specification can improve a security protection capability.

## Description

### TECHNICAL FIELD

One or more embodiments of this specification relate to the field of security protection technologies, and in particular, to aspect-oriented technology based security protection systems.

### BACKGROUND

Conventional web applications mostly use web firewall technologies for security protection. The web firewall technologies perform feature matching on data in a request. It can be seen that the web firewall technologies rely on detecting a request feature, detection rules are easily bypassed by an attacker, and a protection granularity is relatively coarse.

### SUMMARY

One or more embodiments of this specification describe aspect-oriented technology based security protection systems, which can improve a security protection capability.

The aspect-oriented technology based security protection systems provided in the embodiments of this specification include a cloud management and control platform and a self-protection module that is installed on a server, and the self-protection module is installed in an aspect-oriented security base of the server for a to-be-protected application. The cloud management and control platform is configured to formulate a security policy, and send the security policy to the server, where the security policy includes injection point information of the to-be-protected application and a detection rule. The aspect-oriented security base is configured to send the security policy to the self-protection module when obtaining, by listening, the security policy sent by the cloud management and control platform. The self-protection module is configured to parse the security policy to obtain the injection point information and the detection rule; inject the detection rule into a corresponding injection point in the to-be-protected application based on the injection point information so that the detection rule is executed when a function corresponding to the injection point is called; and determine, based on an execution result, whether to execute a corresponding event action, and generate a security protection log.

The aspect-oriented technology based security protection systems provided in the embodiments of this specification have the following beneficial effects: The security protection systems include a cloud management and control platform and a self-protection module that is installed on a server. The cloud management and control platform formulates a security policy, and sends the security policy to the server. The aspect-oriented security base sends the security policy to the self-protection module when obtaining, by listening, the security policy sent by the cloud management and control platform. The self-protection module parses the security policy to obtain injection point information and a detection rule; injects the detection rule into a corresponding injection point in a to-be-protected application based on the injection point information so that the detection rule is executed when a function corresponding to the injection point is called; and determines, based on an execution result, whether to execute a corresponding event action, and generates a security protection log. As the injection point is a function in the to-be-protected application, the systems provided in the embodiments of this specification can provide function-level real-time protection in a running process of the to-be-protected application, and feature a finer protection granularity than web firewall technologies. In addition, the systems do no need to request for feature detection as in the firewall technologies. Instead, in the systems, the detection rule is injected into the function corresponding to the injection point. When the function is called, the detection rule is executed and is not bypassed. The systems have a better heuristic detection capability, and can check for security risks without upgrading or changing application service code and perform actions in time, and therefore are particularly suitable for Internet applications that use a large quantity of open-source components.

### BRIEF DESCRIPTION OF DRAWINGS

To describe the technical solutions in the embodiments of this specification or in the related technologies more clearly, the following briefly describes the accompanying drawings needed for describing the embodiments or the related technologies. Clearly, the accompanying drawings in the following descriptions show some embodiments of this specification, and a person of ordinary skill in the art can still derive other drawings from these accompanying drawings without creative efforts.
FIG. 1 is a structural block diagram illustrating an aspect-oriented technology based security protection system, according to an embodiment of this specification;
FIG. 2 is a structural block diagram illustrating a self-protection module on a server, according to an embodiment of this specification; and
FIG. 3 is a structural block diagram illustrating an aspect-oriented security base on a server, according to an embodiment of this specification.

### DESCRIPTION OF EMBODIMENTS

The solutions provided in this specification are described below with reference to the accompanying drawings.

As mentioned in BACKGROUND, a web firewall technology is easily bypassed by an attacker, and a protection granularity is relatively coarse. Consequently, a security protection capability is relatively low.

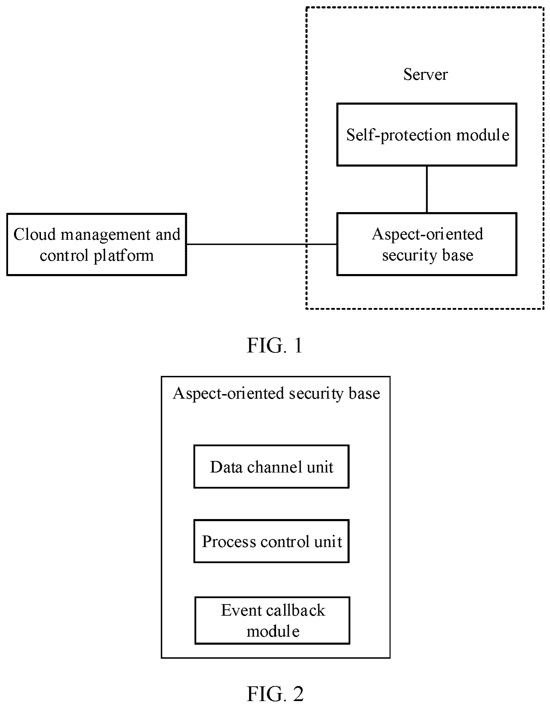

To this end, some embodiments of this specification provide an aspect-oriented technology based security protection system. Referring to FIG. 1, the system includes a cloud management and control platform and a self-protection module that is installed on a server, and the self-protection module is installed in an aspect-oriented security base of the server for a to-be-protected application. The cloud management and control platform is configured to formulate a security policy, and send the security policy to the server, where the security policy includes injection point information of the to-be-protected application and a detection rule. The aspect-oriented security base is configured to send the security policy to the self-protection module when obtaining, by listening, the security policy sent by the cloud management and control platform. The self-protection module is configured to parse the security policy to obtain the injection point information and the detection rule; inject the detection rule into a corresponding injection point in the to-be-protected application based on the injection point information so that the detection rule is executed when a function corresponding to the injection point is called; and determine, based on an execution result, whether to execute a corresponding event action, and generate a security protection log.

The security policy can also be referred to as a containment policy, and the security policy includes the injection point information and the detection rule.

The cloud management and control platform can formulate various security policies by using a policy model, and send a formulated security policy to the server, so as to implement real-time dynamic upgrade of a security protection capability, thereby implementing emergent containment on a sudden security vulnerability and optimization of a day-to-day security policy.

In some embodiments, the injection point information can include an injection point and an injection location, the injection point is a function that the detection rule is injected into, and the injection location is used for an execution sequence relationship between the detection rule and the function.

The injection location can be understood as a location for executing the detection rule before the function is called or a location for executing the detection rule after the function is called.

The injection point is a function in the to-be-protected application, i.e., a method. The to-be-protected application has a large quantity of functions. These functions are called in a certain sequence to implement a functionality of the to-be-protected application.

A function corresponding to the injection point in the embodiments of this specification can be a function built in the Node language, or can be a function dependent on a third party.

It can be seen that, by customizing the injection point information, whether the detection rule is executed before or after a function is called can be specified.

In some embodiments, the detection rule includes at least one of a whitelist detection rule, a blacklist detection rule, and a graylist detection rule, and the whitelist detection rule, the blacklist detection rule, and the graylist detection rule each include a detection target, an operator, and a matching value. The whitelist detection rule is a detection rule that allows continued running of the to-be-protected application when a result obtained by performing operation on the detection target by using the operator meets the matching value. The blacklist detection rule is a detection rule that prevents continued running of the to-be-protected application when a result obtained by performing operation on the detection target by using the operator meets the matching value; and the graylist detection rule is a detection rule that allows continued running of the to-be-protected application and recording of a running process for subsequent further classification on the graylist detection rule when a result obtained by performing operation on the detection target by using the operator meets the matching value.

It can be understood that the detection target refers to a detection object in a function, for example, an input parameter or an output parameter of the function. The operator is a matching method, for example, prefix matching, suffix matching, or fuzzy matching, etc. For example, if the input parameter is a character string, a prefix of the character string is extracted for matching with the matching value. If the prefix of the character string matches the matching value, it is considered that the matching succeeds; or if the prefix of the character string does not match the matching value, it is considered that the matching fails.

Certainly, a detection type can be further specified in the detection rule. For example, a matching operation is performed on a detection target whose detection type is specified.

It can be understood that for the whitelist detection rule, when the result obtained by performing operation on the detection target by using the operator meets the matching value, it is considered that the call of the function has no impact or adverse impact on security of the to-be-protected application, and therefore continued running of the to-be-protected application is allowed.

It can be understood that for the blacklist detection rule, when the result obtained by performing operation on the detection target by using the operator meets the matching value, it is considered that the call of the function has impact on security of the to-be-protected application, and therefore continued running of the to-be-protected application is prevented.

It can be understood that for the graylist detection rule, when the result obtained by performing operation on the detection target by using the operator meets the matching value, it is uncertain whether the call of the function has impact on security of the to-be-protected application, and therefore continued running of the to-be-protected application and recording of the running process of the to-be-protected application are allowed so that it is subsequently determined whether the call of the function has impact on the security of the to-be-protected application, and further determined, based on a determining result, whether the graylist detection rule is classified as a whitelist detection rule or a blacklist detection rule.

The self-protection module can also be referred to as a runtime application self-protection module (RASP module for short).

An aspect-oriented technology refers to a technology that dynamically adds a function to a program in a uniform way by using a pre-compilation method and a dynamic runtime proxy, without modifying source code.

The to-be-protected application can be a Node application, and Node is a server-side scripting language.

The injection point can also be referred to as an aspect-oriented injection point, and is a method or a function that needs to have an enhanced functionality dynamically added based on an aspect-oriented technology.

In actual scenarios, there can be a plurality of servers. These servers are all interconnected to the cloud management and control platform. The cloud management and control platform is configured to formulate a security policy and then send the formulated security policy to each server. As part of an aspect-oriented multi-language security capability of the server, the self-protection module is installed in the aspect-oriented security base for the to-be-protected application. The aspect-oriented security base is configured to listen for the security policy sent by the cloud management and control platform, and send a new security policy to the self-protection module when obtaining the new security policy by listening. The self-protection module is configured to inject the detection rule into the injection point, and execute the detection rule before or after the function corresponding to the injection point is called, so as to determine whether the result obtained by performing operation on the detection target by using the operator meets the matching value, i.e., obtain the execution result.

Then, if the execution result is "matched", the self-protection module can determine a corresponding processing method based on a type of the detection rule. For example, if the type of the detection rule is blacklist, running of the to-be-protected application needs to be prevented, i.e., the processing method is "blocking". If the type of the detection rule is whitelist, continued running of the to-be-protected application is enabled, i.e., the processing method is "skipping". If the type of the detection rule is graylist, continued running of the to-be-protected application and recording of the running process are enabled, i.e., the processing method is "skipping and recording". In addition, the security protection log is further generated. The log includes content such as the execution result and the processing method.

The processing methods of "blocking", "skipping", and "skipping and recording" can also be referred to as event actions. If the execution result indicates that the matching value is met, an event action is performed; or if the execution result indicates that the matching value is not met, no event action is performed.

It can be seen that the self-protection module has an effect of security reinforcement and security protection for the to-be-protected application, thereby providing runtime security protection for the to-be-protected application.

In some embodiments, the self-protection module can be further configured to generate an alarm event when determining, based on the execution result, that the call of the function causes a security event; and report the alarm event to the cloud management and control platform.

For example, if the type of the detection rule is blacklist, and the execution result indicates that the result obtained by performing operation on the detection target by using the operator meets the matching value, the call of the function has impact on secure running of the to-be-protected application and causes a security event of the to-be-protected application. In addition to performing the "blocking" event action, the self-protection module further generates an alarm event and reports the alarm event to the cloud management and control platform. In this way, the cloud management and control platform knows which alarm event has occurred in the to-be-protected application, so as to perform optimization processing on the call of the function that causes the alarm event in the to-be-protected application, thereby reducing occurrence of an alarm event.

In some embodiments, the cloud management and control platform is specifically configured to extract a common feature of a plurality of alarm events for a same injection point; and optimize, based on the common feature, a security policy corresponding to the injection point.

It can be understood that, because the to-be-protected application is continuously optimized and updated, a security policy corresponding to each injection point in the to-be-protected application also needs to be continuously optimized and updated. The to-be-protected application can be updated based on an alarm event that occurs in the to-be-protected application, and therefore the security policy can also be updated based on the alarm event. In addition, when optimizing and updating a security policy corresponding to one injection point, the cloud management and control platform can consider a common feature of a plurality of alarm events that occur at the injection point, so as to formulate a security policy that can cover the plurality of alarm events, thereby improving the security protection capability of the to-be-protected application.

In some embodiments, referring to FIG. 2, the aspect-oriented security base includes a data channel unit, a process control unit, and an event callback module, where the process control unit is configured to manage a life cycle of the self-protection module, and during running of the self-protection module, listen for the security policy sent by the cloud management and control platform, and send the security policy obtained by listening to the self-protection module through the data channel unit; and the event callback module is configured to support execution of the security policy when being invoked.

In other words, the process control unit in the aspect-oriented security base is configured to manage the life cycle of the self-protection module, for example, mounting and uninstallation, etc. of the self-protection module, and during running of the self-protection module, listen for the security policy sent by the cloud management and control platform, thereby knowing whether the cloud management and control platform has a new security policy. If a new security policy exists, the new security policy is sent to the self-protection module through the data channel unit. The event callback module is configured to support execution of the detection rule in the security policy. In other words, the detection rule can be executed only by invoking the event callback module.

It can be seen that, by using the above units of the aspect-oriented security base, the security policy can be sent to the self-protection module, and necessary support for executing the detection rule by the self-protection module can be ensured.

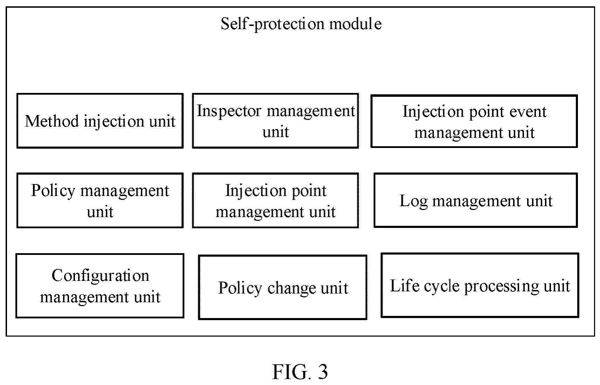

In some embodiments, referring to FIG. 3, the self-protection module can include a method injection unit, an inspector management unit, and an injection point event management unit, where the method injection unit is configured to inject the security policy into the injection point; the inspector management unit is configured to execute the detection rule in the security policy each time the function corresponding to the injection point is called if a quantity of times of calling the function corresponding to the injection point in a preset time period is less than a preset quantity of times; and determine, based on an execution result, whether the call of the function causes a security event; and the injection point event management unit is configured to execute a corresponding event action when a determining result of the inspector management unit is affirmative.

The method injection unit in the self-protection module is configured to inject the detection rule in the security policy sent by the aspect-oriented security base into the corresponding injection point.

The inspector management unit does not execute the detection rule each time the function of the injection point is called. If a function is called frequently and the detection rule is executed each time the function is called, running efficiency of the to-be-protected application is greatly reduced. Therefore, a preset quantity of times is set for a preset time period, for example, 30 times per minute. Within one minute, the detection rule is executed when the function is called for the first 30 times, and is not executed when the function is called after the 30^{th} time. For example, after the detection rule is executed, if the result obtained by performing operation on the detection target by using the operator meets the matching value and the type of the detection rule is blacklist, the call of the function causes a security event. Therefore, the injection point event management unit performs the "blocking" event action.

When the function is called, and a quantity of times of calling within the preset time period is less than the preset quantity of times, the event callback module is triggered, and further the event callback module instructs the inspector management unit to execute the detection rule.

It can be seen that, by using the above units of the self-protection module, injection of a security policy, execution of a detection rule, execution of an event action, etc. can be implemented.

Further, referring to FIG. 3, the self-protection module can further include a policy management unit, an injection point management unit, and a log management unit, where the policy management unit is configured to manage a security policy from a local file on the server and the security policy sent by the cloud management and control platform; the injection point management unit is configured to maintain an injection point involved in each security policy; and the log management unit is configured to manage a running log of the self-protection module and a security protection log of the injection point.

In other words, the policy management unit in the self-protection module is configured to manage various security policies. These security policies can come from the local file on the server, or can come from security policies sent by the cloud management and control platform. The security policies from the local file on the server are mostly basic and common security policies. The injection point management unit is configured to manage each injection point, i.e., each injection point corresponding to each security policy in the policy management unit. The log management unit is configured to manage the running log generated during running of the self-protection module and the security protection log of the injection point, etc.

A security policy from the local file in the policy management unit can be used for daily security protection or to provide a basic security protection capability when a network between the cloud management and control platform and the server is unreachable.

It can be seen that these units can implement management on security policies, injection points, logs, etc.

In some embodiments, referring to FIG. 3, the self-protection module can further include a configuration management unit, and the configuration management unit is configured to manage a systematic configuration attribute of the self-protection module.

The configuration management unit is configured to manage the systematic configuration attribute of the self-protection module. Because running of the self-protection module needs some systematic configuration attributes, these systematic configuration attributes are stored in the configuration management unit so that the configuration management unit determines whether these systematic configuration attributes are met.

Further, the systematic configuration attribute includes an execution time threshold of a detection rule; and correspondingly, the inspector management unit is specifically configured to stop a security protection operation of the injection point if a time needed for executing the detection rule corresponding to one injection point is greater than or equal to the execution time threshold.

When executing the detection rule for one injection point, the inspector management unit determines whether an execution time of the detection rule for the injection point is greater than or equal to the execution time threshold. If yes, it indicates that execution of the detection rule occupies a relatively large amount of time, which is not conducive to running of the to-be-protected application, and therefore, a security protection operation of the injection point is stopped. Subsequently, the detection rule for the injection point can be adjusted to reduce the time needed for execution.

Here, provided is a systematic configuration attribute, i.e., the execution time threshold of a detection rule. Certainly, other systematic configuration attributes can exist.

In some embodiments, referring to FIG. 3, the self-protection module can further include a policy change unit, and the policy change unit is configured to determine whether the security policy sent by the aspect-oriented security base is a newly added security policy or an updated security policy; and if the security policy is an updated security policy, check the updated security policy, and after the check succeeds, inject the updated security policy into the injection point by using the method injection unit.

In other words, the policy change unit is configured to determine, by listening, whether the aspect-oriented security base sends a new security policy, and if a new security policy is sent, determine whether the new security policy is a newly added one or an updated one. The newly added security policy refers to the first security policy of a newly added injection point. The updated security policy refers to an updated policy for a security policy of an existing injection point. For an updated security policy, it can be checked whether a version of the updated security policy is higher than a version of an existing security policy. If yes, the check succeeds. If no, the check fails. After the check succeeds, the method injection unit can inject the updated security policy.

It can be seen that the policy change unit can implement a check on an updated security policy. Certainly, a check rule for a newly added security policy can also be set in the policy change unit.

In some embodiments, referring to FIG. 3, the self-protection module can further include a life cycle processing unit, and the life cycle processing unit can initialize configurations in a mounting phase of the self-protection module, and clear information in an uninstallation phase, among other operations.

For example, in actual scenarios, the life cycle processing unit initializes various message processors in the mounting phase of the self-protection module, and clears global objects in the uninstallation phase.

In conclusion, as the injection point is a function in the to-be-protected application, the system provided in the embodiments of this specification can provide function-level real-time protection in a running process of the to-be-protected application, and features a finer protection granularity than web firewall technologies. In addition, the system does no need to request for feature detection as in the firewall technologies. Instead, in the system, the detection rule is injected into the function corresponding to the injection point. When the function is called, the detection rule is executed and is not bypassed. The system has a better heuristic detection capability, and can check for security risks without upgrading or changing application service code and perform actions in time, and therefore is particularly suitable for Internet applications that use a large quantity of open-source components.

It can be understood that a structure shown in the embodiments of this specification does not constitute a specific limitation on the apparatus in the embodiments of this specification. In some other embodiments of this specification, the above-mentioned apparatus can include more or fewer components than those shown in the figure, or combine some components, or split some components, or have different component arrangements. The components in the figure can be implemented by hardware, software, or a combination of software and hardware.

Content such as information exchange and an execution process between the modules in the apparatus and the system is based on the same idea as the method embodiments of this specification. Therefore, for detailed content, references can be made to descriptions in the method embodiments of this specification. Details are not described herein again.

The embodiments of this specification are described in a progressive method. For same or similar parts in the embodiments, refer to each other. Each embodiment focuses on a difference from other embodiments. Particularly, the apparatus embodiments are basically similar to the method embodiments, and therefore are described briefly. For related parts, references can be made to related descriptions in the method embodiments.

A person skilled in the art should be aware that in the above-mentioned one or more examples, functionalities described in this specification can be implemented by hardware, software, firmware, or any combination thereof. When implemented by using software, these functionalities can be stored in a computer-readable medium or transmitted as one or more instructions or one or more pieces of code on a computer-readable medium.

In the above-mentioned specific implementations, the objectives, technical solutions, and beneficial effects of this application are further described in detail. It should be understood that the above-mentioned descriptions are merely specific implementations of this application, but are not intended to limit the protection scope of this application. Any modification, equivalent replacement, improvement, etc. made based on the technical solutions of this application shall fall within the protection scope of this application.

## Claims

1. An aspect-oriented technology based security protection system, comprising a cloud management and control platform and a self-protection module that is installed on a server, wherein the self-protection module is installed in an aspect-oriented security base of the server for a to-be-protected application, wherein:
the cloud management and control platform is configured to formulate a security policy, and send the security policy to the server, wherein the security policy comprises injection point information of the to-be-protected application and a detection rule;
the aspect-oriented security base is configured to send the security policy to the self-protection module when obtaining, by listening, the security policy sent by the cloud management and control platform; and
the self-protection module is configured to parse the security policy to obtain the injection point information and the detection rule; inject the detection rule into a corresponding injection point in the to-be-protected application based on the injection point information so that the detection rule is executed when a function corresponding to the injection point is called; and determine, based on an execution result, whether to execute a corresponding event action, and generate a security protection log.

2. The system according to claim 1, wherein
the self-protection module is further configured to generate an alarm event when determining, based on the execution result, that the call of the function causes a security event; and report the alarm event to the cloud management and control platform.

3. The system according to claim 2, wherein
the cloud management and control platform is specifically configured to extract a common feature of a plurality of alarm events for a same injection point; and optimize, based on the common feature, a security policy corresponding to the injection point.

4. The system according to claim 1, wherein the aspect-oriented security base comprises a data channel unit, a process control unit, and an event callback module, wherein:
the process control unit is configured to manage a life cycle of the self-protection module, and during running of the self-protection module, listen for the security policy sent by the cloud management and control platform, and send the security policy obtained by listening to the self-protection module through the data channel unit; and the event callback module is configured to support execution of the security policy when being invoked.

5. The system according to claim 1, wherein the self-protection module comprises a method injection unit, an inspector management unit, and an injection point event management unit, wherein:
the method injection unit is configured to inject the security policy into the injection point;
the inspector management unit is configured to execute the detection rule in the security policy each time the function corresponding to the injection point is called if a quantity of times of calling the function corresponding to the injection point in a preset time period is less than a preset quantity of times; and determine, based on an execution result, whether the call of the function causes a security event; and
the injection point event management unit is configured to execute a corresponding event action when a determining result of the inspector management unit is affirmative.

6. The system according to claim 5, wherein the self-protection module further comprises a policy management unit, an injection point management unit, and a log management unit, wherein:
the policy management unit is configured to manage a security policy from a local file on the server and the security policy sent by the cloud management and control platform;
the injection point management unit is configured to maintain an injection point involved in each security policy; and
the log management unit is configured to manage a running log of the self-protection module and a security protection log of the injection point.

7. The system according to claim 6, wherein the self-protection module further comprises a configuration management unit, and the configuration management unit is configured to manage a systematic configuration attribute of the self-protection module.

8. The system according to claim 7, wherein the systematic configuration attribute comprises an execution time threshold of a detection rule; and correspondingly, the inspector management unit is specifically configured to stop a security protection operation of the injection point if a time needed for executing the detection rule corresponding to one injection point is greater than or equal to the execution time threshold.

9. The system according to claim 5, wherein the self-protection module further comprises a policy change unit, and the policy change unit is configured to determine whether the security policy sent by the aspect-oriented security base is a newly added security policy or an updated security policy; and if the security policy is an updated security policy, check the updated security policy, and after the check succeeds, inject the updated security policy into the injection point by using the method injection unit.

10. The system according to claim 1, wherein
the injection point information comprises an injection point and an injection location, the injection point is a function that the detection rule is injected into, and the injection location is used for an execution sequence relationship between the detection rule and the function;
and/or the detection rule comprises at least one of a whitelist detection rule, a blacklist detection rule, and a graylist detection rule, and the whitelist detection rule, the blacklist detection rule, and the graylist detection rule each comprise a detection target, an operator, and a matching value; the whitelist detection rule is a detection rule that allows continued running of the to-be-protected application when a result obtained by performing operation on the detection target by using the operator meets the matching value; the blacklist detection rule is a detection rule that prevents continued running of the to-be-protected application when a result obtained by performing operation on the detection target by using the operator meets the matching value; and the graylist detection rule is a detection rule that allows continued running of the to-be-protected application and recording of a running process for subsequent further classification on the graylist detection rule when a result obtained by performing operation on the detection target by using the operator meets the matching value.
